Europäisches Patentamt

European Patent Office

Office européen des brevets

(11) Publication number: **0 075 983**
**B1**

(12) **EUROPEAN PATENT SPECIFICATION**

(45) Date of publication of patent specification: **21.08.85**

(21) Application number: **82201148.2**

(22) Date of filing: **16.09.82**

(51) Int. Cl.⁴: **B 42 F 17/34,** G 09 B 29/02

(54) **Register for road maps and the like.**

(30) Priority: **29.09.81 NL 8104442**

(43) Date of publication of application:
**06.04.83 Bulletin 83/14**

(45) Publication of the grant of the patent:
**21.08.85 Bulletin 85/34**

(84) Designated Contracting States:
**AT BE CH DE FR GB IT LI LU NL SE**

(56) References cited:
**CH-A- 504 747**
**FR-A- 810 406**
**FR-A-1 117 067**
**FR-A-1 123 381**
**FR-A-1 282 149**
**FR-A-2 441 497**
**US-A-3 191 326**

(73) Proprietor: **de Jong, Willem Theodoor**
**Jachtlaan 56**
**NL-7313 CV Apeldoorn (NL)**

(72) Inventor: **de Jong, Willem Theodoor**
**Jachtlaan 56**
**NL-7313 CV Apeldoorn (NL)**

(74) Representative: **Noz, Franciscus Xaverius, Ir.**
**et al**
**Algemeen Octrooibureau P.O. Box 645**
**NL-5600 AP Eindhoven (NL)**

Courier Press, Leamington Spa, England.

## Description

The invention relates to a register for road maps, maps with plans of towns and the like whereby a cover of the register has been provided on its outer side with a survey map which has been divided into marked compartments, the register further comprising detail maps on a larger scale than the survey map and each corresponding to a marked compartment of the survey map the register furthermore being provided with control-members marked in a manner corresponding with that of the compartments of the survey map each marked control member being coupled with the detail map concerned, so that on actuating a control-member the associated detail map is brought into sight.

Such a register is known from Fr.A—1.123.381. In opening the register for studying a detail map the survey map will not be visible anymore. Thus studying a detail map one will loose the relation between the details shown on said detail map with parts of the country, the town or the like surrounding the part shown on the detail map.

According to the invention said problem has been solved in a simple way by providing on the inner side of the cover and the backside of each of the detail maps

a further survey map corresponding to the survey map on the outer side of the register.

So the user of such a register can study the detail map and at the same time see at a glance the survey map so that he immediately will know the relation between the details shown on the detail map and the further parts shown on the survey map.

It is noted that from CH—A—504.747 there is known a register having a housing for accommodating a stack of detail maps. For use, one of said detail maps can be inserted in a transparent cover of the register. however, there has not been provided a survey map.

Fr—A—810.406 shows a register wherein a survey map and a detail map can be seen on adjacent pages of a book, however no means have been provided for tracing in an easy way the desired detail map.

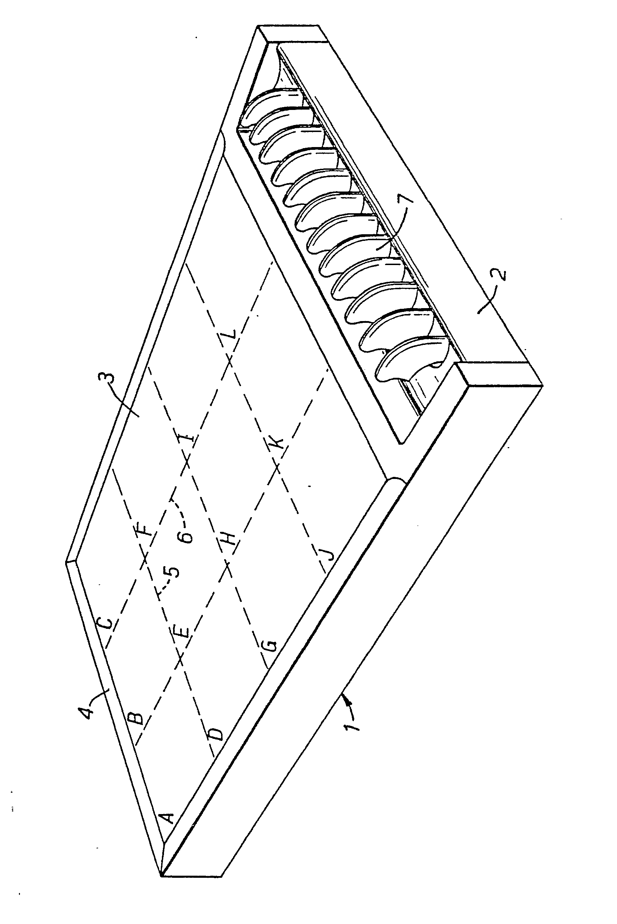

The invention will be described more fully hereinafter with reference to the accompanying Figure.

The register shown in the Figure comprises a housing 1 in which a drawer 2 is adapted to slide. In the position shown the drawer is slipped as far as possible into the housing. The top surface 3 of the housing has, in the embodiment shown, a double-walled structure and the top wall 4 of the double-walled top surface has a slot (not shown) for inserting a map between the two walls of the double wall 3 spaced apart by a short distance and extending parallel to one another.

The top wall of the double wall 3 shown in the Figure is made from transparent material so that the survey map slipped in will be clearly visible. In the embodiment shown the transparent top wall has marking lines 5 and 6 in dots, which are at right angles to one another and thus divide the top surface and hence the subjacent survey map into a plurality of components. The comparments are marked, for example, by characters A to L.

The drawer contains a plurality of detail maps, each of which corresponds to one of the compartments A to L of the survey map drawn on a reduced scale located on the double wall.

From the Figure it will furthermore be apparent that the drawer is provided with a plurality of control-keys 7. Each control-key is provided with a mark corresponding with one of the marks A to L or a similar mark may be provided at each key on the drawer 2.

If it is desired to have the detail map corresponding to the compartment E of the survey map, only the button 7 having the mark E need be depressed, after which the drawer 2 is drawn out, the detail map concerned corresponding to compartment E then becoming visible on the drawn-out drawer. A similar structural design of a mechanism carrying out the selection of the desired map is taught e.g. in NL—A—130 821 and 143 177 and by NL—A—7205519, 7215597, 7311021 and 7317481. From these publications it will be apparent that instead of having a drawer the register may have a tiltable cover. In the latter case part of the detail maps will tilt up together with the cover. On the backside of each detail map and/or on the inner side of the cover is printed a survey map so that like in the embodiment described above the survey map and a detail map can always be simultaneously consulted. As a matter of course, it is possible to use other mechanisms than those described and illustrated in the above-mentioned publications for moving the selected detail map into view.

Preferably the detail maps are arranged in the register so as to be readily exchangeable so that both the survey map and the detail maps can be exchanged in accordance with the region or town visited by the user of the register.

If exchangeability is not required, the register may be constructed without the double top wall and the survey map may be housed in the top wall so as to be enclosed on all sides by the material of the top wall or it may be stuck to the top side of said wall.

The survey map and the associated detail maps may display a given country, a given district of a country or, for example, the plan of a town or the like.

Instead of being printed on the cover, the marking lines may be printed directly on the map.

The reference signs used in the claims are only meant to explain more clearly the intention of the invention and are not supposed to be any restriction concerning the interruption of the invention.

## Claims

1. A register for road maps, maps with plans of towns and the like whereby a cover (3) of the register has been provided on its outer side with a survey map which has been divided into marked compartments (A—L), the register further comprising detail maps on a larger scale than the survey map and each corresponding to a marked compartment (A—L) of the survey map, the register furthermore being provided with control-members (7) marked in a manner corresponding with that of the compartments (A—L) of the survey map each marked control member (7) being coupled with the detail map concerned, so that on actuating a control-member (7) the associated detail map is brought into sight, characterized in that on the inner side of the cover (4) and/or on the backside of each of the detail maps there has been provided a further survey map corresponding to the survey map on the outer side of the register.

2. A register as claimed in Claim 1 characterized in that the cover (3) of the register is a double wall to form a space for receiving the survey map.

3. A register as claimed in Claim 1 or 2 characterized in that both the survey map and the detail maps are arranged in the register (1—3) so as to be exchangeable.

4. A register as claimed in any one of the preceding Claims characterized in that the detail maps can be slid out of the register (1—3).

5. A register as claimed in any one of Claims 1 to 3 characterized in that the register is provided with a cover (3) that can be tilted up, as the case may be, with one or more detail maps.

## Patentansprüche

1. Verzeichnis für Strassenkarten, Stadtpläne, und dgl., bei welchem eine Umhüllung (3) an seiner Aussenseite mit einer Uebersichtskarte ausgestattet ist, welche in markierte Abschnitte (A—L) unterteilt ist und welches Detailkarten in einem gegenüber der Uebersichtskarte grösseren Massstab beinhaltet, wobei jede Detailkarte einem bezeichneten Abschnitt (A—L) der Uebersichtskarte entspricht und das Verzeichnis mit Betätigungsgliedern (7) ausgestattet ist, die entsprechend den Abschnitten (A—L) der Uebersichtskarte bezeichnet sind und jedes so bezeichnete Betätigungsglied (7) mit der entsprechenden Detailkarte im Wirkverbindung steht, so dass bei der Betätigung eines Betätigungsgliedes (7) die ihm zugeordnete Detailkarte sichtbar wird, gekennzeichnet dadurch, dass an der Innenseite der Umhüllung (4) und/oder an der Rückseite jeder Detailkarte zusätzlich eine Uebersichtskarte angeordnet ist, welche mit der Uebersichtskarte an der Aussenseite des Verzeichnisses identisch ist.

2. Verzeichnis nach Anspruch 1, dadurch gekennzeichnet, dass die Umhüllung (3) zur Bildung eines Hohlraumes zur Aufnahme der Uebersichtskarte doppelwandig ausgebildet ist.

3. Verzeichnis nach einem der Ansprüche 1 oder 2, dadurch gekennzeichnet, dass sowohl die Uebersichtskarte wie auch die Detailkarten auswechselbar sind.

4. Verzeichnis nach einem der vorstehenden Ansprüche, dadurch gekennzeichnet, dass die Detailkarten aus dem Verzeichnis (1—3) herausschiebbar sind.

5. Verzeichnis nach einem der Ansprüche 1 bis 3, dadurch gekennzeichnet, dass es mit einer Umhüllung (3) ausgestattet ist, der — je nachdem — mit einer oder mehreren Detailkarten zusammen aufklappbar ist.

## Revendications

1. Un registre pour cartes routières, cartes avec plans de villes et analogues, avec un enveloppe sur la face extérieure de laquelle est prévue d'une carte générale divisée en compartiments repérés (A—L), le registre comportant également des cartes détaillées à plus grande échelle que la carte générale et correspondant chacune aux compartiments repérés (A—L) de la carte générale, le registre comportant de plus des organes de commande (7) repérés de manière correspondante à celle des compartiments (A—L) de la carte générale, chaque organe de commande (7) repéré étant couplé à la carte détaillée concernée, de sorte qu'en actionnant un organe de commande (7) la carte détaillée associée soit présentée à la vue caractérisé en ce que la face intérieur de l'enveloppe et/ou le verso de chacune des cartes détaillées sont munis d'une autre carte générale, correspondant à la carte générale de la face extérieure du registre.

2. Un registre selon la revendication 1, caractérisé en ce que son enveloppe (3) est à double paroi pour former un espace de réception de la carte générale.

3. Un registre selon la revendication 1 ou 2, caractérisé en ce que à la fois la carte générale et les cartes de détail sont disposées dans le registre (1—3) de sorte à être échangeables.

4. Un registre selon l'une quelconque des revendications précédentes, caractérisé en ce que les cartes de détail peuvent être glissées hors du registre (1—3).

5. Un registre selon l'une quelconque des revendications 1 à 3, caractérisé en ce que le registre est muni d'une enveloppe qui peut être basculé si nécessaire, avec une ou plusieurs cartes détaillées.

0 075 983

1